(19) Europäisches Patentamt
European Patent Office
Office européen des brevets

(11) Veröffentlichungsnummer: **0 320 644**
**A2**

(12) **EUROPÄISCHE PATENTANMELDUNG**

(21) Anmeldenummer: 88119257.9

(51) Int. Cl.⁴: **B60K 15/00**

(22) Anmeldetag: 19.11.88

(30) Priorität: 12.12.87 DE 3742259

(43) Veröffentlichungstag der Anmeldung:
21.06.89 Patentblatt 89/25

(84) Benannte Vertragsstaaten:
FR GB IT SE

(71) Anmelder: **Daimler-Benz Aktiengesellschaft**
**Postfach 600202 Mercedesstrasse 136**
**D-7000 Stuttgart 60(DE)**

(72) Erfinder: **Oeffling, Heiner**
**Goethestrasse 18**
**D-7448 Wolfschlugen(DE)**
Erfinder: **Böhringer, Harald**
**Fleinsbachstrasse 21**
**D-7303 Neuhausen(DE)**
Erfinder: **Scheurenbrand, Dieter**
**Hauffstrasse 21**
**D-7448 Wolfschlugen(DE)**
Erfinder: **Wawra, Helmut, Dr.**
**J.F.-Weishaarstrasse 43**
**D-7054 Korb(DE)**

(54) **Kraftstoffbehälter.**

(57) Kraftstoffbehälter mit einer Vorrichtung zum Auffangen von Kraftstoffdämpfen.

Bei einem bekannten, mit einer solchen Vorrichtung ausgestattteten Kraftstoffbehälter ist ein beim Betanken in seine Durchlaßstellung zu steuerndes Sperrventil vorgesehen, das eine Verbindung des Kraftstoffbehälterinnenraumes mit einem Aktivkohlefilter zum Adsorbieren von Kraftstoffdämpfen herstellt. Die Betätigung des Sperrventils erfolgt beim Einführen eines Zapfpistolen-Füllrohres in den Einfüllstutzen des Kraftstoffbehälters auf mechanischem Wege, was spezielle technische Maßnahmen erfordert.

Beim anmeldungsgemäßen Kraftstoffbehälter kann auf eine mechanische Betätigung des Sperrventils zum Öffnen einer Kraftstoffdampfleitung verzichtet werden, indem das Sperrventil ab einer bestimmten Schräglage des Kraftstoffbehälters unter Schwerkrafteinfluß die Kraftstoffdampfleitung selbsttätig schließt. Damit eine automatische Unterbrechung der Kraftstoffzufuhr erfolgt, obgleich sich durch die geöffnete Kraftstoff dampfleitung im Kraftstoffbehälter beim Betanken kein Überdruck aufbauen kann, ist zusätzlich noch ein bei Erreichen des maximalen Füllniveaus schließendes und dadurch lediglich noch einen Anstieg des Kraftstoffspiegels im Einfüllstutzen bewirkendes Schwimmerventil vorgesehen.

Fig.1

## Kraftstoffbehälter

Die Erfindung betrifft einen Kraftstoffbehälter mit den Merkmalen des Oberbegriffes von Patentanspruch 1.

Bei einem Kraftstoffbehälter dieser Art (DE-OS 36 05 708) ist die Verbindung der Kraftstoffdampfleitung mit dem Aktivkohlefilter bei verschlossenem Einfüllstutzen durch das Sperrventil unterbrochen. Dadurch ist sichergestellt, daß bei einer beispielsweise unfallbedingten Schräg- oder Kopflage des Kraftstoffbehälters kein Kraftstoff über den Aktivkohlefilter ausfließen kann.

Das Sperrventil ist innerhalb des Einfüllstutzens angeordnet, und sein Ventilglied ist indirekt über das zum Betanken in den Einfüllstutzen einzuführende Füllrohr einer Zapfpistole in seine Durchlaßstellung zu steuern, damit die während des Betankens entstehenden Kraftstoffdämpfe zum Aktivkohlefilter abströmen und in diesem adsorbiert werden können.

Eine innerhalb des Einfüllstutzens in einem das Füllrohr aufnehmenden Führungskanal angeordnete Ringdichtung umschließt das Füllrohr abdichtend, so daß während des Be tankens aus dem Einfüllstutzen keine Kraftstoffdämpfe ins Freie entweichen können.

Die Betätigung des Ventilgliedes wird mechanisch mittels einer das innere Ende des Führungskanals abdeckenden Verschlußklappe bewerkstelligt, die bei Einführen des Zapfpistolen-Füllrohres in den Führungskanal in die Offenstellung verschwenkt wird.

Aufgabe der Erfindung ist es, einen Kraftstoffbehälter mit den im Oberbegriff des Patentanspruches 1 aufgeführten Merkmalen so zu verbessern, daß zum Betanken auf eine mechanische Ansteuerung des Sperrventils und dadurch auf einen aufwendigen Betätigungsmechanismus verzichtet werden kann und dennoch Auslaufsicherheit im Crash-Fall gewährleistet ist.

Diese Aufgabe wird erfindungsgemäß durch die kennzeichnenden Merkmale des Patentanspruches 1 gelöst.

Beim erfindungsgemäß ausgebildeten Kraftstoffbehälter wird somit nur ab einer bestimmten Schräg- bzw. in Kopflage die zum Aktivkohlefilter führende Kraftstoffdampfleitung durch das Sperrventil selbsttätig gesperrt. Ein bei Erreichen des maximalen Füllniveaus schließendes Schwimmerventil stellt dabei sicher, daß trotz der ständig offenen Kraftstoffdampfleitung bei nach Erreichen des Füllniveaus innerhalb des Einfüllstutzens noch weiter ansteigendem Kraftstoff die Abschaltautomatik der Zapfpistole ausgelöst wird.

Vorteilhafte Ausgestaltungen der Erfindung sind Gegenstand von Unteransprüchen.

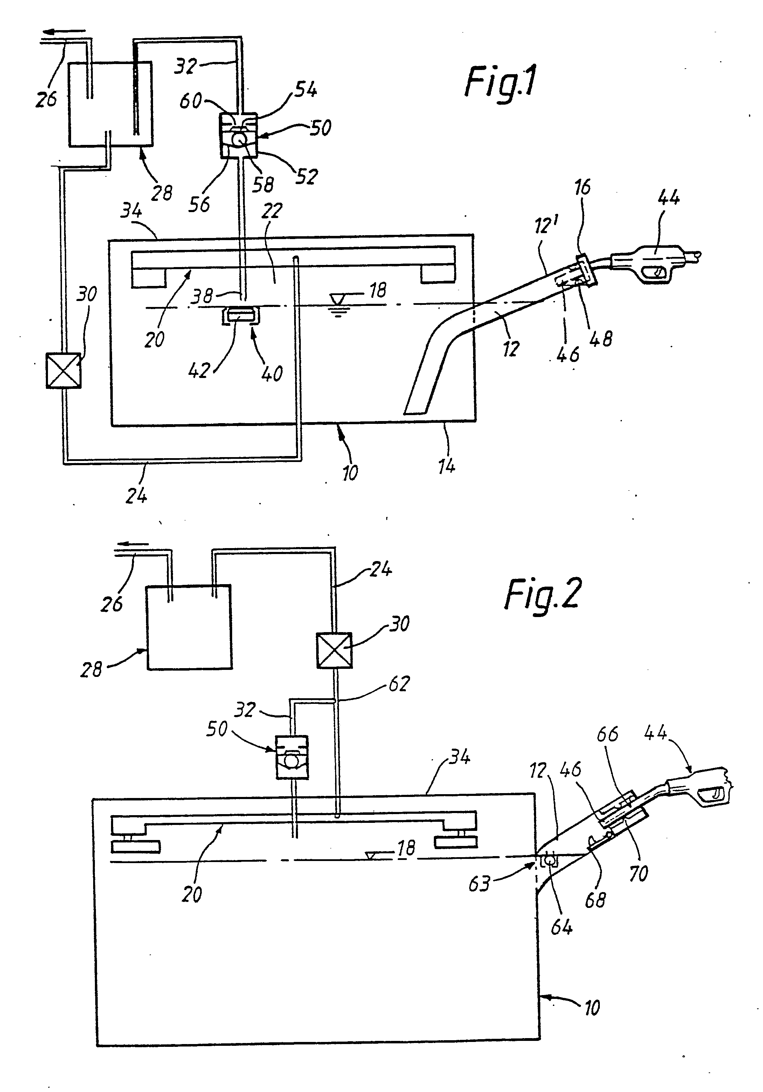

Ausführungsbeispiele erfindungsgemäßer Kraftstoffbehälter sind in den Figuren 1 und 2 der Zeichnung dargestellt.

In Figur 1 ist ein als Ganzes mit 10 bezeichneter Kraftstoffbehälter eines Kraftfahrzeuges mit einem Einfüllstutzen 12 ausgestattet, der sich vorzugsweise bis nahe an den Behälterboden 14 erstreckt. Sein mit einem abnehmbaren Verschlußdeckel 16 verschlossenes Stutzenendstück 12' befindet sich oberhalb des maximalen Füllnivaus 18. 20 bezeichnet als Ganzes eine an sich bekannte, im kraftstofffreien oberen Behälterraum 22 installierte Be-und Entlüftungseinrichtung, von der eine Be-und Entlüftungsleitung 24 z.B. aus dem Tankboden 14 heraus-und zu einem an einer Motoransaugleitung 26 angeschlossenen Aktivkohlefilter 28 geführt ist.

In der Be- und Entlüftungsleitung 24 ist noch ein an sich bekanntes Tanklüftungsventil 30 zwischengeschaltet, das erst bei Erreichen eines vorbestimmten Behälterinnendruckes eine Verbindung zwischen Kraftstoffbehälterinnenraum und Aktivkohlefilter 28 herstellt.

Mit 32 ist eine Kraftstoffdampfleitung bezeichnet, die aus der oberen Behälterwand 34 heraus- und zum Aktivkohlefilter 28 geführt ist. Sie ragt in den bei maximal gefülltem Kraftstoffbehälter 10 von Kraftstoff freibleibenden oberen Behälterraum 22 hinein und endet in diesem mit geringfügigem Abstand zum maximalen Füllniveau 18. Ihrem behälterinneren Leitungsende 38 ist ein im Kraftstoffbehälter 10 vorgesehenes Schwimmerventil 40 zugeordnet, dessen aufschwimmendes Ventilglied 42 das Leitungsende 38 der Kraftstoffdampfleitung 32 bei Erreichen des maximalen Füllniveaus 18 verschließt. Dadurch kann sich bei fortsetzender Kraftstoffzufuhr ein Behälterinnendruck aufbauen, der zwar das Tanklüftungsventil 30 noch nicht öffnet, jedoch bewirkt, daß das Kraftstoffniveau im Einfüllstutzenendstück 12' ansteigt und die Abschaltautomatik einer Zapfpistole 44 abschaltet, deren in das Einfüllstutzenendstück 12' eingeführtes Füllrohr 46 von einer stutzeninneren Ringdichtung 48 umschlossen ist, die verhindert, daß während des Betankens aus dem geöffneten Einfüllstutzen 12 Kraftstoffdämpfe entweichen können.

50 bezeichnet ein in der Kraftstoffdampfleitung 32 liegendes Sperrventil, das ab einer bestimmten Schräglage des Kraftstoffbehälters 10 die Kraftstoffdampfleitung 32 sperrt und dadurch verhindert, daß bei entsprechender Schräg- oder Kopflage des Kraftstoffbehälters 10 aus diesem Kraftstoff zum Aktivkohlefilter 28 gelangen und ins Freie fließen kann.

Dieses Sperrventil 50 weist vorzugsweise ein in einem Ventilgehäuse 52 verschiebbar angeordnetes Ventilglied 54 auf, das mittels eines vorzugsweise kugelförmigen, auf einer Pfanne 56 aufruhenden Masseteils 58, gemäß Fig. 1, nach oben in seine Schließlage steuerbar ist, in welcher es einen Ventilsitz 60 verschließt.

Beim Ausführungsbeispiel gemäß Fig. 2 besteht der konstruktive Unterschied zur vorstehend erläuterten Ausführungsform darin, daß die das Tanklüftungsventil 30 aufweisende Be- und Entlüftungsleitung 24 z.B. aus der oberen Behälterwand 34 des Kraftstoffbehälters 10 herausgeführt und die gleichfalls aus der oberen Behälterwand 34 herausgeführte, mit dem Sperrventil 50 ausgestattete Kraftstoffdampfleitung 32, in Strömungsrichtung der Kraftstoffdämpfe gesehen, vor dem Tanklüftungsventil 30, bei 62, an der Be- und Entlüftungsleitung 24 angeschlossen ist und innerhalb des Kraftstoffbehälters 10 in einem größeren Abstand oberhalb des maximalen Füllniveaus 18 einmündet.

Innerhalb des unterhalb des maximalen Füllniveaus 18 in den Kraftstoffbehälter 10 einmündenden Einfüllstutzens 12 ist ein das maximale Füllniveau 18 bestimmendes Schwimmerventil 63 eingebaut, dessen aufschwimmender, beispielsweise kugelförmiger Ventilkörper 64 nach Erreichen des maximalen Füllniveaus 18 schließt. Dadurch steigt beim Betanken der Kraftstoffspiegel lediglich noch im Einfüllstutzen 12 zur Betätigung der Abschaltautomatik der Zapfpistole 44 an.

Dem Füllrohr 46 der Zapfpistole 44 ist innerhalb des Einfüllstutzens 12 ein diesen verengender Führungskanal 66 zugeordnet, der an seinem inneren Ende mit einer sich selbsttätig in seine Schließstellung zurückstellenden Verschlußklappe 68 sowie mit einer das Füllrohr 46 umschließenden Ringdichtung 70 ausgestattet ist.

Diese Konstruktion bietet den Vorteil, daß nach Entnahme der Zapfpistole 44 aus dem Einfüllstutzen 12 dessen Führungskanal 66 verschlossen ist und praktisch keine Kraftstoffdämpfe beim Öffnen des Einfüllstutzens 12 entweichen können.

## Ansprüche

1. Kraftstoffbehälter mit einer Vorrichtung zum Auffangen von Kraftstoffdämpfen, an dessen sich oberhalb des maximalen Kraftstoffniveaus befindendem Behälterraum eine mit einem Sperrventil ausgestattete, zu einem Aktivkohlefilter führende Kraftstoffdampfleitung angeschlossen ist und in dessen unterhalb des maximalen Füllniveaus in den Kraftstoffbehälter einmündenden und mit seinem freien Stutzenendstück sich oberhalb des maximalen Füllniveaus befindenden Einfüllstutzen eine bei Einführen eines Zapfpistolen-Füllrohres dieses abdichtend umschließende Ringdichtung angeordnet ist, **dadurch gekennzeichnet,** daß die Kraftstoffdampfleitung (32) durch das Sperrventil (50) ab einer bestimmten Schräglage des Kraftstoffbehälters (10) unter Schwerkrafteinfluß selbsttätig sperrbar ist, und daß ein bei Erreichen des maximalen Füllniveaus (18) schließendes und dadurch lediglich noch einen Anstieg des Kraftstoffspiegels im Einfüllstutzen (12) bewirkendes Schwimmerventil (40; 62) vorgesehen ist.

2. Kraftstoffbehälter nach Anspruch 1, **dadurch gekennzeichnet,** daß durch das Schwimmerventil (40) das behälterinnere Ende (38) der Kraftstoffdampfleitung (32) verschließbar ist.

3. Kraftstoffbehälter nach Anspruch 1, **dadurch gekennzeichnet,** daß das Schwimmerventil (63) innerhalb des Einfüllstutzens (12) angeordnet ist und sich dessen Ventilsitz in der Ebene des maximalen Füllniveaus (18) befindet.

4. Kraftstoffbehälter nach einem der vorhergehenden Ansprüche, **dadurch gekennzeichnet,** daß die Kraftstoffdampfleitung (32) an einer von einer behälterinneren Be- und Entlüfungseinrichtung (20) wegführenden und am Aktivkohlefilter (28) angeschlossenen Be- und Entlüftungsleitung (24), in Strömungsrichtung des Kraftstoffdampfes gesehen, vor einem in der Be-und Entlüftungsleitung (24) liegenden Tanklüftungsventil (30) angeschlossen ist.

Fig.1

Fig.2